# EUROPEAN PATENT APPLICATION

(11) **EP 1 032 237 A1**
(43) Date of publication of application: **30.08.2000**
(21) Application number: 99400416.6
(22) Date of filing: 22.02.1999
(51) Int. Cl.: H04Q 7/38

(54) **A CDMA communication system with soft handover**

(71) Applicant: Motorola Limited, Basingstoke, Hampshire RG22 4PD (GB)
(72) Inventor: Shakhgildian, Vagan, Bath, BA1 2LY (GB); Whinnett, Nicolas, 75004 Paris (FR); Gosse, Karine, 75014 Paris (FR); Johnson, Christopher, 75014 Paris (FR)
(74) Representative: Kopacz, William James

(57) **Abstract**

The invention relates to a CDMA communication system (400) operating in a soft handover mode. In most cellular CDMA communication systems, operation in soft handover mode is controlled by downlink signal conditions. The current invention comprises means (413) for utilising an uplink signal quality such as a signal to interference ratio for determining the operation of, the system in handover. Specifically, a primary serving base station is selected as the base station having the best combined uplink and downlink performance thereby ensuring that efficient power control can be maintained. Furthermore, the subscriber unit (407) will enter a power up mode for base stations (403) having a low uplink signal quality wherein power control information from that base station (403) will be ignored. The invention is applicable to third generation wideband CDMA cellular communication systems.

## Description

### Field of the invention

This invention relates to a CDMA communication system and particularly to a CDMA cellular communication system using ,soft handovers.

### Background of the Invention

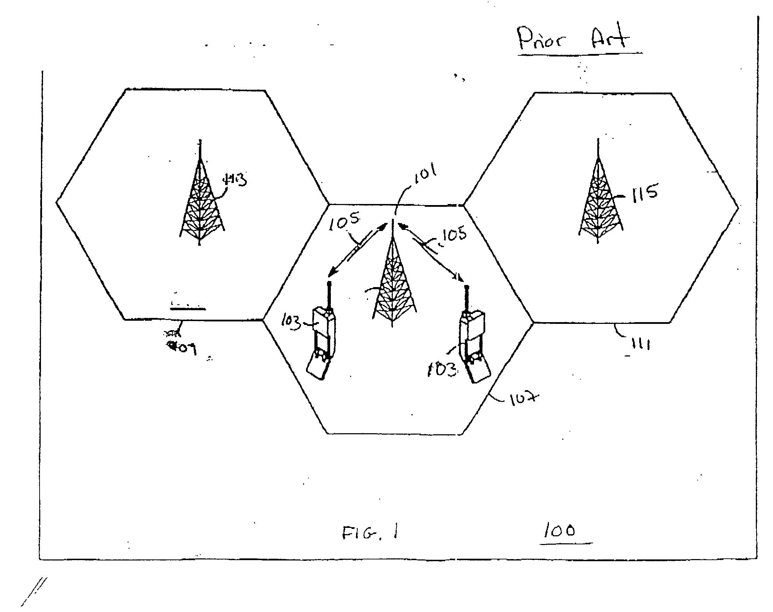

In a cellular communication system each of the subscriber units (mobile stations) communicates with typically a fixed base station. Communication from the subscriber unit to the base station is known as uplink and communication from the base station to the subscriber unit is known as downlink. The total coverage area of the system is divided into a number of separate cells, each predominantly covered by a single base station. The cells are typically geographically distinct with an overlapping coverage area with neighbouring cells. FIG. 1 illustrates a cellular communication system 100. In the system, a base station 101 communicates with a number of subscriber units 103 over radio channels 105. In the cellular system, the base station 101 covers users within a certain geographical area 107, whereas other geographical areas 109, 111 are covered by other base stations 113, 115.

As a subscriber unit moves from the coverage area of one cell to the coverage area of another cell, the communication link will change from being between the subscriber unit and the base station of the first cell, to being between the subscriber unit and the base station of the second cell. This is known as a handover. Specifically, some cells may lie completely within the coverage of other larger cells.

All base stations are interconnected by a fixed network. This fixed network comprises communication lines, switches, interfaces to other communication networks and various controllers required for operating the network. A call from a subscriber unit is routed through the fixed network to the destination specific for this call. If the call is between two subscriber units of the same communication system the call will be routed through the fixed network to the base station of the cell in which the other subscriber unit currently is. A connection is thus established between the two serving cells through the fixed network. Alternatively, if the call is between a subscriber unit and a telephone connected to the Public Switched Telephone Network (PSTN) the call is routed from the serving base station to the interface between the cellular mobile communication system and the PSTN. It is then routed from the interface to the telephone by the PSTN.

A cellular mobile communication system is allocated a frequency spectrum for the radio communication between the subscriber units and the base stations. This spectrum must be shared between all subscriber units simultaneously using the system.

One method of sharing this spectrum is by a technique known as Code Division Multiple Access (CDMA). In a Direct Sequence CDMA (DS-CDMA) communication system, the signals are prior to being transmitted multiplied by a high rate code whereby the signal is spread over a larger frequency spectrum. A narrowband signal is thus spread and transmitted as a wideband signal. At the receiver the original narrowband signal is regenerated by multiplication of the received signal with the same code. A signal spread by use of a different code will at the receiver not be despread but will remain a wide band signal. In the receiver the majority of interference caused by interfering signals received in the same frequency spectrum as the wanted signal can thus be removed by filtering.

Consequently a plurality of subscriber units can be accomodated in the same wideband spectrum by allocating different codes for different subscriber units. Codes are chosen to minimise the interference caused between subscriber units typically by choosing orthogonal codes when possible. A further description of CDMA communication systems can be found in 'Spread Spectrum CDMA Systems for Wireless Communications', Glisic & Vucetic, Artech house Publishers, 1997, ISBN 0-89006-858-5. Examples of CDMA cellular communication systems are IS 95 standardised in North America and the Universal Mobile Telecommunication System (UMTS) currently under standardisation in Europe.

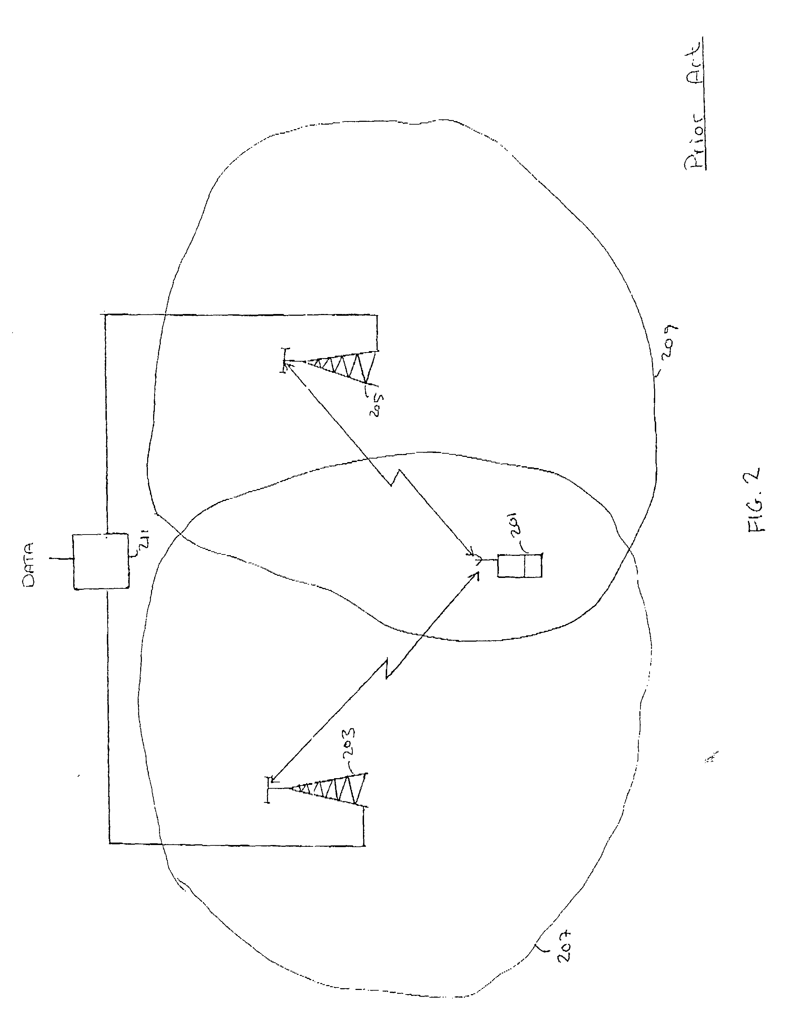

Typically, CDMA communication systems use a handover technique known as soft hand over. In a soft handover, a subscriber unit is simultaneously served by more than one base station. FIG. 2 illustrates the situation where a subscriber unit 201 is in soft handover with two base stations 203, 205 each covering a cell 207, 209. In the uplink the signal received at each base station 203, 205 is communicated to a controller 211 where the signals are combined and the received data is recovered. In the downlink the data to be transmitted to the subscriber unit is communicated from the controller to both base stations 203, 205 and both base stations simultaneously transmit the data to subscriber unit 201. The subscriber unit 201 combines the two signals and demodulates the signal.

The quality of the radio communication between the subscriber unit and the base station is determined by the signal to noise level of the signals. Other base stations and subscriber units generate interference, which increases the noise level and thus reduces the quality. In order to attain an acceptable quality level the interference must thus be kept sufficiently low. A major technique for interference reduction in CDMA system is use of power control whereby the transmitted power of each subscriber unit and base station is maintained at the minimum level required for the signal to be received at an acceptable quality. Uplink power control can be implemented by the base station measuring the received signal quality and transmitting power up information to the subscriber unit when the signal quality is below an acceptable level, and power down information when the signal quality is above this level. Similarly, downlink power control can be implemented by the subscriber unit transmitting power up or Flower down information depending on the signal quality of the signal received at the subscriber unit.

In the UMTS communication system currently under standardisation by the European Telecommunication Standards Institute (ETSI), it has been proposed to define an active set of base stations for subscriber units in soft handover. This active set consists of base stations which are suitable for supporting the communication of the subscriber unit in soft handover. It is currently proposed that the active set is denned by base stations having downlink carrier to interference ratios (C/I) between two thresholds. When the C/I is above the higher threshold the subscriber unit will not be in soft handover and when below the lower threshold, the base station is not a suitable contender for soft handover.

In soft handover, it may be advantageous to select a primary serving base station rather than having all potential base stations serving the subscriber unit equally. In a proposal submitted to ETSI preference: NEC Technologies UK, Telecom Modus, Fujitsu. Proposed Text for Site Selection Diversity Transmit Power Control (SSDT). Tdoc SMG2 UMTS-L1 36/99, European Telecommunication Standards Institute) a specific Site selection diversity transmit power control (SSDT) option has been proposed. The proposed diversity scheme is suitable for slow moving subscriber units.

Operation is summarized as follows. The subscriber unit selects one of the base stations from its active set to be 'primary', all other base stations are classed as 'non primary'. The main objective is to transmit on the downlink from the best base station, thus reducing the interference caused by multiple transmissions in a soft handover mode. A second objective is to achieve fast site selection without network intervention, thus maintaining the advantage of the soft handover. In order to select a primary base station, each base station is assigned a temporary identification and subscriber unit periodically transmits a primary base station identification to the connecting base stations. The non-primary base stations selected by the subscriber unit switch of the transmission power. The criterion for determining the best base station is proposed to be the received signal level at the subscriber unit of a downlink pilot signal.

According to the proposal, the subscriber unit periodically sends the identity code of the primary base station via vacant power control bits which are obtained by puncturing the power control information according to a predetermined format. A base station recognizes its state as non-primary if the received primary identity code does not match with the own identity code. Otherwise, the base station recognizes its state as primary.

A significant problem with this proposal is the impact of uplink symbol errors on its performance. These errors can corrupt the primary identity code and this may lead to wrong decoding in the base receivers. As a result, a wrong base station or even no base station at all can be assigned as primary. Another significant problem is that the determination of the primary serving base station is mainly determined in response to the downlink signal conditions. It will thus select a base station as primary serving base station when this has the best down link performance even if another base station exists which has almost similar down link performance but a significantly better uplink performance. This results in reduced reliability of the communication and increased, interference.

Also, current proposals for the UMTS communication system suggests that soft handover is established on the basis of the downlink C/I measurements performed by the subscriber unit. Thus, as mentioned, the subscriber unit selects the base stations having downlink C/I between two handover thresholds as the active set for the given subscriber unit.

In this situation, the uplink power control loop operates as follows. Each of the base stations in the active set compares uplink signal quality with the target and generates power up or power down command accordingly. This information is communicated to the subscriber unit via transmit power control bits embedded in the downlink signal. The subscriber unit analyses commands received from each of the base stations in the active set, and increases the subscriber unit transmit power only if all received commands are power up commands. Otherwise the subscriber units transmit power is decreased.

The downlink power control operation is different. The mobile receiver performs maximum ratio combining of all pilot signals coming from the base stations in the active set. It then calculates the average downlink signal quality and compares it with the downlink target and generates the appropriate power up or power down command. This is then transmitted to all base station in the active set.

A major source of degradation in power control performance in soft handover is errors occuring in the power control bits.

Another issue that impacts the system performance in soft handover is potential difference in C/I figures between downlink and uplink. This is particularly relevant in third generation cellular communication systems such as UMTS, where asymmetric (uplink only or downlink only) data traffic can result in different interference levels in the two links.

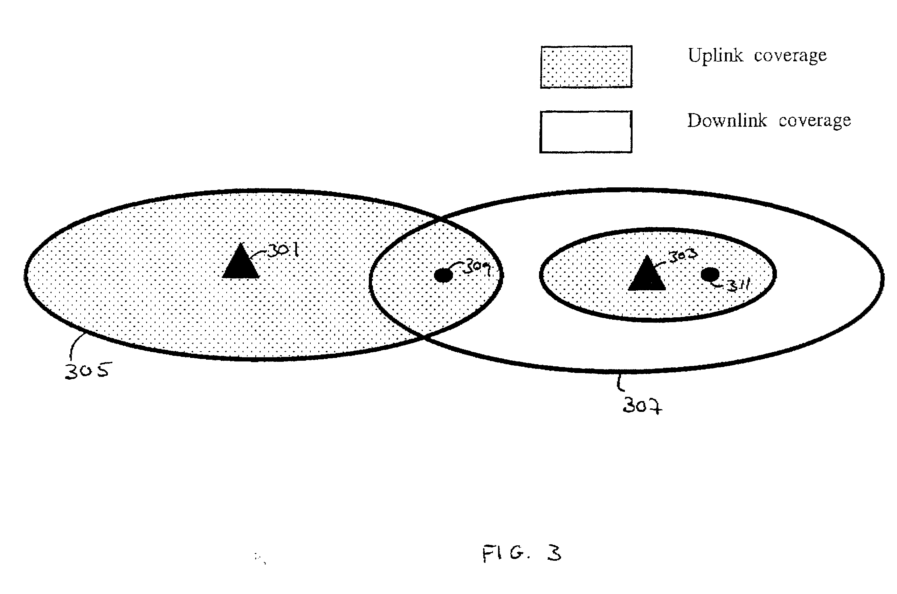

This situation is illustrated in FIG.3, which shows an example of a CDMA handover. Two base stations 301, 303 are shown covering two cells 305,307. A subscriber unit 309 moves from cell 305 to cell 307. Cell coverage (in the uplink or in the downlink) is defined as an area around a given base station, where the target C/I can be achieved. In cell 305, the uplink and the downlink coverage are the same, however in cell 307, the uplink coverage is smaller than in the downlink. One possible reason for this is that the subscriber unit 309 operates a voice service, arid cell 305 has no other users in it, whereas cell 307 has another user 311 transmitting a large number of high speed (e.g. 384 kbps) data packets on the uplink.

The handover scheme currently adopted in UNITS is insensitive to uplink conditions. If the downlink C/I's of the subscriber unit 309 is between the two soft handover threshold margins, the subscriber unit 309 will be put in soft handover mode with cells 305 and 307 included in the active set. This will have undesirable consequences:
a) Degradation in uplink power control performance. Although the uplink signal quality measured in the base station will be lower than the target figure and the base will generate power up commands, the mobile will interpret some of them as "power down" because of power control symbols errors in the downlink.
b) Inefficient usage of processing resources in base station of cell 307 and of communication capacity of the fixed network as the signals received at the base station of cell 307 are communicated to a central unit for combining the signals from the two base stations in the active set.

CDMA communication systems using soft handover and power control are thus known. However, as described there numerous significant problems with existing an proposed CDMA systems. Mainly, when operating in soft handover, an inflexible decision process only considering limited parameters is used when determining the operational state of the communication system. This leads to degraded reliability of the communication and to increased interference.

### Summary of the Invention

The invention seeks to provide a CDMA communication system reducing interference and/or improving communication when in soft handover operation.

According to the present invention, there is provided a CDMA cellular communication system comprising a plurality of subscriber units; a first plurality of base stations; a subsystem formed by a first subscriber unit from the plurality of subscriber units and a second plurality of base stations from the first plurality of base stations being in soft hand over with the first subscriber unit; and means for determining an uplink signal quality of a signal transmitted by the first subscriber unit. at each of the second plurality of base stations; characterised by having means for determining a characteristic of the subsystem in response to at least one of the uplink signal qualities.

According to a feature of the invention the characteristic of the subsystem is a selection of at least one primary serving base station from the second plurality of base stations and preferably only the at least one primary serving base station transmits to the first subscriber unit.

Preferably, the first subscriber unit is operable to enter a power up mode when an uplink signal quality from at least one of the second plurality of base stations is below a threshold.

According to a different feature the communication system further comprises combining means for combining signals from the first subscriber unit received at the second plurality of base stations and characterised in that the signals received at base stations with a signal quality below a threshold are excluded from the combining. Preferably, only signals received at base stations from the second plurality of base stations having a signal quality above the threshold are communicated to the combining means.

### Brief Description of the Drawings

An embodiment of the present invention is described below, by way of example only, with reference to the Drawings, in which:
FIG. 1 is an illustration of a cellular communication system according to prior art;
FIG. 2 is an illustration of a soft handover in a cellular communication system according to prior art;
FIG. 3 is an illustration of asymmetrical cell coverage in a CDMA communication system;
FIG. 4 shows a UMTS cellular communication system to which this invention is applicable; and
FIG. 5 illustrates an example of primary serving base station selection in accordance with the current invention.

### Detailed Description of a Preferred Embodiment

In a preferred embodiment of the invention, the soft handover will not only be controlled by down link conditions but will also be determined in response uplink signal quality conditions.

The following description focuses on an embodiment compliant with the current approach for the standardisation of UMTS but it will be apparent that the invention is not limited to this application.

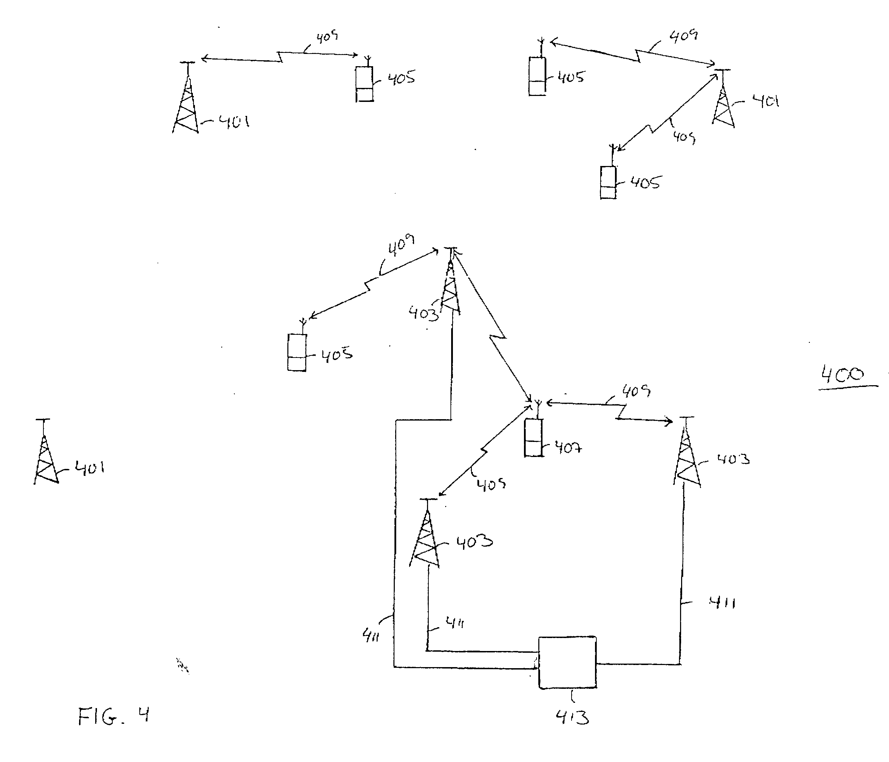

FIG. 4 illustrates a UMTS communication system 400 to which the present invention is applicable. The communication system 400 comprises a large number of base stations 401, 403 serving a large number of subscriber units 405, 407. Typically, the base stations 401,403 will each cover a different geographical area although these areas typically will overlap. The base stations 401, 403 support a large number of subscriber units 405, 407 over radio channels 409, each subscriber unit 405,407 mainly being supported by the most appropriate base station 401,403 which is often the closest base station 401,403. When handing over from one cell to another, the subscriber unit 405, 407 can simultaneously be served by a plurality of base stations 401,403. The base stations suitable for a soft handover are in UMTS known as an active set.

Hence, during soft handover, a subsystem is formed by the subscriber unit and the active set of base stations. This is illustrated in FIG. 4, where a soft handover subsystem is formed by the subscriber unit 407 and the three base stations 403 with which the subscriber unit 407 is in soft handover. According to an embodiment of the invention the operation and characteristics of this subsystem is determined. by the uplink signal quality of the transmissions from the subscriber unit as received by the base stations.

In the embodiment shown in FIG. 4, each of the base stations 403 in the active set have means for determining the uplink signal quality for the link between the subscriber unit 407 and the base station 403. The information is communicated over part of the fixed network 411 to a central subsystem controller 413. It will be apparent that the functionality of the controller 413 can be distributed and located anywhere in the network. The central controller 413 is operable to process the uplink signal quality from the base stations 403 and control the operation of the subsystem in response to the received information. Specifically, the controller 413 is operable to control receiver and transmitter functionality of the base stations 403 themselves, any network elements involved in the communication to the subscriber unit 407 or the subscriber unit 407 itself. Control of network elements including the base stations 403 is achieved by transmitting control messages through the fixed network 411. Control of the subscriber unit 407 is achieved by transmission of control messages over the radio channels 409.

In the embodiment illustrated in FIG. 4, the central controller 413 furthermore contains means for receiving signal data received by the base stations 403 from the subscriber unit 407. It will also contain combining means for combining this signal data and for recovering the received data sequence. Similarly the central controller contains means for receiving a data sequence to be transmitted to the subscriber unit 407 and for distributing it to the appropriate base stations 403.

According to an embodiment of the invention, a primary serving base station is selected in response to both a downlink signal quality and an uplink signal quality. A primary serving base station is in this case the base station, which predominantly serves the subscriber unit. At a given time there may only be one primary serving base station in the active set or there may be a plurality of base stations or indeed the whole active set may be primary active base stations. Specifically, the primary serving base station may be the only base station transmitting to the subscriber unit when in soft handover. Preferably, the primary serving base station is chosen in response to both the uplink and downlink signal quality for the subscriber unit and individual base station.

In UMTS, it is assumed that the subscriber unit has access to the information on the uplink interference floor, which is published on a broadcast channel in each cell. Therefore the mobile is capable of comparing the uplink signal qualities of the cells in the active set. According to an embodiment of the invention, the subscriber unit will initially rank the cells on the basis of downlink pilot level. Subsequently, the subscriber unit will check the interference floor for the various base stations and exclude base stations having an interference floor above a certain threshold from being chosen as primary serving cell. The subscriber unit will thus choose a primary serving base station as the base station having the best downlink signal quality and an uplink signal quality above a certain threshold.

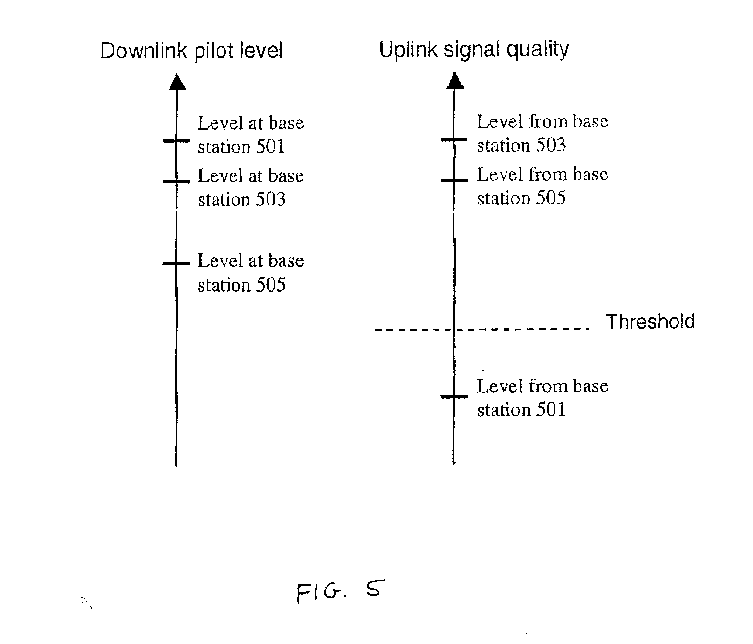

FIG. 5 illustrates the described principle- FIG. 5 shows the uplink and downlink signal quality for an active set having three base stations 501, 503, 505. Base station 501 has the strongest downlink pilot, and although it has a very low uplink quality, the mobile in accordance with the current approach in UMTS will select base station 501 as primary serving base station. Because the uplink signal quality in the cell of base station 501 is very low the base station is unlikely to correctly decode the primary base station identity transmitted by the subscriber unit. It therefore may or may not declare itself as primary serving base station depending on the decision process for dealing with a situation of low uplink signal quality. In the other two cells the uplink signal quality is sufficiently good, and they decode the identity code correctly as the identity of base station 501 and turn the transmit power off in the given dedicated channel. Thus, the selected primary base station has the best downlink and the worst uplink among the base stations in the active set. Due to the low uplink signal quality, the uplink power control bits are likely to be received with errors and the efficiency of the power control loop will be significantly degraded.

Referring to the example in Fig. 5, the proposed procedure will result in the cell of base station 503 being selected as the primary serving base station. Because of the low uplink signal quality, base station 501 may still appoint itself primary serving base station, and both base stations 501 and 503 will be transmitting to the subscriber unit. However, the system performance is still improved because the mobile receiver performs maximum ratio combining of the two detected signals with power control being effective on one of the signals.

Alternatively, a more complex decision process can be used which weights the uplink and downlink signal qualities prior to choosing the base station having the best combined signal quality as primary serving base station. A third alternative which achieves improved performance is to have two uplink signal quality thresholds. In this embodiment the base stations can appoint themselves as primary base station if the signal quality is below a first threshold with the second threshold being the threshold applied by the subscriber unit in choosing a primary serving base station. The first threshold may be set to ensure that a base station having very bad uplink signal quality will still transmit to the subscriber unit. The second threshold applied in the subscriber unit ensures that the subscriber unit will be served by at least one base station having a reliable uplink signal quality and thus an effective power control loop.

In one embodiment, the communication system includes controller means operable to select one or more base stations as primary serving base station in response to the current conditions. Specifically, the controller means can be centrally located, be located in one of the base stations or can be distributed in the system. In this embodiment the base stations in the active set are operable to communicate a primary serving base station status, which indicates whether the individual base station considers itself to be a primary serving base station or not. The controller is operable to detect this status information and if no base station is active as a primary serving base station, it will select all base stations as primary serving base stations.

In a slightly different embodiment, the controller means are operable to receive information of the uplink signal quality for each of the base stations in the active set and will select all base stations as primary serving base stations if all uplink signal qualities are below a given threshold.

Preferably, the operation of the power control loops will also depend on the uplink signal quality. In this embodiment, when the uplink signal quality for a given base station is very low, a signal will be transmitted to the subscriber unit causing it to enter a power up mode. In this power up mode the subscriber unit will take into account that power should be increased in order to provide reliable communication with this base station. However, whether the subscriber unit actually increases the transmit power will depend on the communication links with other base stations. Specifically, when in a power up mode the subscriber unit will ignore all power control information received from the specific base station instigating the power up mode, or alternatively interpret all power control information received from that base stations power up commands. In a power control scheme such as proposed for UMTS, these approaches will be equivalent as the subscriber unit only increases power when all base station involved in a soft handover requests a power up.

In this case, the base station having the low uplink signal quality may choose not to transmit the power control symbols, thus reducing the downlink interference level. Alternatively, the power control symbols may be replaced with extra pilot symbols, thus improving channel estimation in the mobile receiver.

In a different embodiment, the power control information from the subscriber unit (407) to a first base station may be received with a very low signal quality. This may prevent the information to be recovered whereas the same information may be received reliably by a second base station of the active set. According to this embodiment, the information is communicated from the second base station to the first base station which takes this into account when adjusting transmit power. It is to be understood that the information communicated includes communicating the actual recovered power control information or communicating any additional information, which improves the reliability of the power control information received at the first base station.

In a soft handover, the signals received from the subscriber unit at each of the base stations are relayed to combining means via the fixed network. The combining means combines the plurality of signals and generates the received data sequence. The combining means are typically located centrally, in one of the base stations or distributed in the system. In the preferred embodiment of the invention, the operation of the combining means and the communication of the signals from the base stations to the combining means depend on the uplink signal quality in the different base stations. Specifically, signals from the base stations having a poor uplink signal quality are excluded from the combining in the combining means. This reduces the computational burden of the combining means. Furthermore, the signal data from base stations having a poor uplink signal quality is not communicated to the combining means thereby saving backhaul capacity in the fixed network with only negligible degradation in the uplink performance.

The decision of which signals to include can be made either by the fixed part of the communication system or by the subscriber unit. In the first case the base station informs a central controller when the uplink quality degrades below a certain level. In the second case, when the mobile selects a new candidate cell to add to the active, it also reads the uplink interference floor on the broadcast channel in the candidate cell. In UMTS, the uplink interference floor is published on the broadcast channel in every cell. The subscriber unit will then calculate the transmit power required to access a given cell. If this power exceeds the maximum average power of the subscriber unit, it will signal to the network to exclude this cell from the uplink combining procedure.

It will be obvious to the person skilled in the art, that the uplink signal quality can be measured be several different parameters depending on the specific application. Specifically one or more of the following parameters can be used as an indication of signal quality.

### A. A signal level.

Generally the higher the received signal level from a specific subscriber unit is, the better is the signal quality. If the received signal is predominantly from the wanted subscriber unit, it is thus a good indication of the signal level.

### B. An interference level.

The higher the interference level is, the lower is the signal quality for the same signal level. The interference level is therefore useful as an indication of the signal quality especially if information on the signal level is available.

### C. A bit error rate.

The number of errors received in the received data stream will directly reflect the signal quality level. Measuring a bit error rate is therefore useful for evaluating the received signal quality. The bit error rate can either be an uncoded raw bit error rate or can be a decoded bit error rate including the effect of forward error correcting coding.

### D. A frame error rate.

Similarly, the failure rate of a block or frame of data can be used as an indication of signal quality.

### E. A signal to interference ratio.

A measurement of a wanted signal energy or power in relation to a noise or interference energy or power will provide a strong indication of the current signal quality. Many cellular communication systems include derivation of a carrier to interference ratio as an indicator of the current performance of a radio link. This ratio will be suitable for measuring the uplink signal quality of the current invention.

## Claims

1. A CDMA cellular communication system comprising
a plurality of subscriber units (405,407);
a first plurality of base stations (401,403);
a subsystem formed by a first subscriber unit (407) from the plurality of subscriber units (405,407) and a second plurality of base stations (403) from the first plurality of base stations (401,403) being in soft hand over with the first subscriber unit (407); and
means for determining an uplink signal quality of a signal transmitted by the first subscriber unit (407) at each of the second plurality of base stations (405);
characterised by having
means (413) for determining a characteristic of the subsystem in response to at least one of the uplink signal qualities.

2. A CDMA cellular communication system as claimed in claim 1 characterised in that the characteristic of the subsystem is a selection of at least one primary serving base station from the second plurality of base stations (403).

3. A CDMA cellular communication system as claimed in claim 1 characterised in that only the at least one primary serving base station transmits to the first subscriber unit.

4. A CDMA cellular communication system as claimed in claim 2 or 3 characterised by further comprising means for determining a downlink signal quality at the first subscriber unit (407) from each of the second plurality of base stations (403).

5. A CDMA cellular communication system as claimed in claim 2 to 4 characterised by further comprising means (413) for excluding a base station from the second plurality of base stations (403) as the at least one primary serving base station when the upink signal quality for that base station is below a threshold.

6. A CDMA cellular communication system as claimed in claim 2 characterised by further comprising means (413) for selecting all base stations of the second plurality of base stations (403) as primary serving base stations when all uplink signal qualities are below a threshold.

7. A CDMA cellular communication system as claimed in claim 2 wherein selection of primary serving base station is by the subscriber unit (407).

8. A CDMA cellular communication system as claimed in claim 2 characterised by further comprising controller means (413) operable to receive a primary serving base station status from each of the second plurality of base stations (403), and to select all of the second plurality of base stations (403) as primary serving base stations when no base station indicates that it is the primary serving base station.

9. A CDMA cellular communication system as claimed in claim 1 characterised in that the first subscriber unit (407) is operable to ignore power control information from a base station (501) which has an uplink signal quality below a threshold.

10. A CDMA cellular communication system as claimed in claim 1 or 9 characterised in that the first subscriber unit (407) is operable to enter a power up mode when an uplink signal quality from at least one of the second plurality of base stations (403) is below a threshold.

11. A CDMA cellular communication system as claimed in claim 1 characterised in that power control information from the first subscriber unit (407) to a first base station from the second plurality of base stations (403) is routed from a second base station from the second plurality of base stations (403) which has better uplink signal quality.

12. A CDMA cellular communication system as claimed in claim 1 characterised by further comprising combining means (413) for combining signals from the first subscriber unit (407) received at the second plurality of base stations (403) and characterised in that the signals received at base stations (403) with a signal quality below a threshold are excluded from the combining.

13. A CDMA cellular communication system as claimed in claim 12 characterised in that only signals received at base stations from the second plurality of base stations (403) having a signal quality above the threshold are communicated to the combining means (413).

14. A CDMA cellular communication, system as claimed in any previous claim characterised in that the uplink signal quality is determined from at least one parameter chosen from the group consisting of:
a) a signal level;
b) an interference level;
c) a bit error rate;
d) a frame error rate; and
e) a signal to interference ratio.
